# EUROPEAN PATENT SPECIFICATION

(11) **EP 1 100 322 B1**
(45) Date of publication and mention of the grant of the patent: **03.11.2004**
(21) Application number: 00929949.6
(22) Date of filing: 10.05.2000
(51) Int. Cl.: A01K 29/00, A01K 1/00

(54) **A VEHICLE FOR DETERMINING THE CLIMATE**
FAHRZEUG ZUR BESTIMMUNG DES KLIMAS
VEHICULE PERMETTANT DE DETERMINER LE CLIMAT

(30) Priority: 25.05.1999 NL 1012138
(43) Date of publication of application: 23.05.2001
(73) Proprietor: Lely Enterprises AG, 6300 ZUG (CH)
(72) Inventor: GEERTS, Franciscus, Theodorus, Cornelis, NL-4926 RJ LAGE ZWALUWE (NL)
(74) Representative: Corten, Maurice Jean F.M.
(86) International application number: PCT/NL2000/000309
(87) International publication number: WO 2000/070942

(56) References cited:
- WO-A-96/14735
- WO-A-97/31524
- FR-A- 2 586 223
- FR-A- 2 710 767
- US-A- 4 227 645
- US-A- 5 474 085
- PATENT ABSTRACTS OF JAPAN vol. 16, no. 120 (E-1182), 26 March 1992 (1992-03-26) & JP 03 289310 A (TOSHIBA CORP.), 19 December 1991 (1991-12-19)
- PATENT ABSTRACTS OF JAPAN vol. 10, no. 299 (M-524), 11 October 1986 (1986-10-11) & JP 61 110678 A (HITACHI LTD), 28 May 1986 (1986-05-28)

## Description

The invention relates to an assembly of a stable and an unmanned vehicle which is adapted to be used in a stable, such as a cowshed, according to claim 1.

In this manner it is possible to determine, in the absence of operators, whether there occur climatic changes in the stable.

From Patent Abstracts of Japan vol. 16, no.120 (E-1182) & JP 03 289310 a self-running type monitoring robot having a robot arm is known per se. On the leading end of the robot arm a measuring head equipped with various kinds of sensors is attached. Patent Abstracts of Japan vol. 16, no.120 (E-1182) & JP 03 289310 describes the following sensors to be attached to the robot arm: a CCD camera, a pyroelectric infrared sensor, and an ultrasonic sensor. In addition a loop antenna for detecting corona discharge and an optical sensor for detecting position are mounted on top of the robot.

From Patent Abstracts of Japan vol. 10, no.299 (M-524) & JP 61 110678 a travelling robot for a dangerous ambience is known per se. Said robot is specifically adapted to be used in a coal mine and therefore comprises an unexplosive driving device. On the robot are mounted various sensors with which the ambient temperature and gas content can be determined. The robot as described in Patent Abstracts of Japan vol. 10, no.299 (M-524) & JP 61 110678 is remotely controlled by means of an optical fibre.

From US-A-5474085 a vehicle for remote sensing of livestock, wherein based on thermographic images information regarding animals, such as weight, number, location carcass pH, etc. is obtained is known per se.

In accordance with an inventive feature, the detection means comprise a temperature sensor and/or an air velocity sensor and/or a gas sensor and/or an air humidity sensor and/or a light intensity sensor and/or an air pressure sensor.

For the purpose of determining the climate in the stable very accurately, the detection means are disposed on the vehicle in such a manner that they are able to carry out measurements at different levels in the stable. This is realized in that the detection means are capable of being disposed at different levels on a fixed carrier or in that the carrier is disposed so as to be adjustable in height relative to the vehicle. According to another inventive feature, the unmanned vehicle is provided with a data processing unit for storing the data from the sensors. According to again another aspect of the invention, the signals emitted by the sensors are registered and/or processed by means of a processing unit and/or a control unit. When it appears that the climate in the stable has become or threatens to become uncontrollable, there are activated alarm means which emit an alarm signal to a supervisor. According to another inventive feature, the unmanned vehicle comprises a transmitter unit with the aid of which the data from the sensors and/or the control signals derived from the data from the sensors are transmitted to a registration and/or control unit.

In accordance with an aspect of the invention, the unmanned vehicle is provided with navigation means with the aid of which the unmanned vehicle is guided through the stable.

According to again another inventive feature, the unmanned vehicle comprises an animal identification system and/or a camera and/or a radar. This makes it possible to observe the behaviour and/or abnormal behaviour of the animals and to alarm the supervisor with the aid of the aforementioned alarm means. Further it is possible to trace a specific animal.

According to a further inventive feature, the data collected by the unmanned vehicle are stored in a data management system.

In accordance with another inventive feature, the quantities of feed and/or the composition of the feed to be supplied to the animals are/is altered when the climate in the stable changes.

According to again another inventive feature, the quantity of feed to be supplied to the animals is increased when the temperature in the stable has fallen below approximately 4°C.

The invention will now be explained in further detail with reference to the accompanying drawings.
Figure 1 is a plan view of a stable with an unmanned vehicle accommodated therein, which vehicle is provided with detection means, according to the invention, and
Figure 2 is a side view of the unmanned vehicle shown in Figure 1.

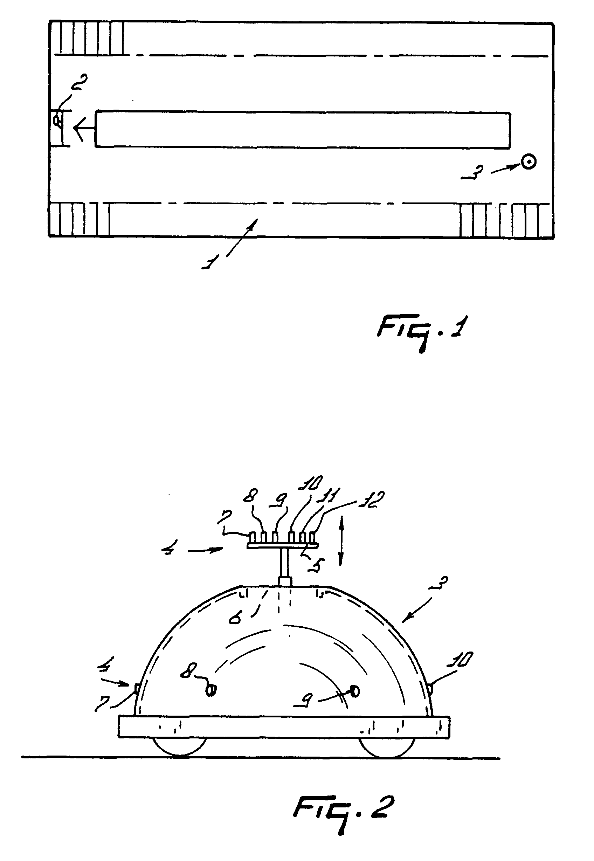

Figure 1 is a plan view of a stable 1 provided with a milking robot 2 for automatically milking animals and an unmanned vehicle 3 which is provided with detection means 4 for determining the climate in the stable 1. As shown in Figure 2, a part of the detection means 4 is disposed on a carrier 5 which is constituted by a telescopic carrier. When the telescopic carrier 5 is completely withdrawn, the platform on which the detection means 4 are disposed will be located in a recess 6 in the unmanned vehicle 3. Near the lower side of the unmanned vehicle 3 there are also disposed detection means 4. The detection means 4 depicted in Figure 2 comprise a temperature sensor 7, an air velocity sensor 8, a gas sensor 9, an air humidity sensor 10, a light intensity sensor 11 and an air pressure sensor 12.

## Claims

1. An assembly of a stable and an unmanned vehicle adapted to be used in said stable (1), such as a cowshed, said vehicle (3) being provided with detection means (4) for determining the climate in the stable (1).

2. An assembly as claimed in claim 1, **characterized in that** the detection means (4) comprise a temperature sensor (7).

3. An assembly as claimed in claim 1 or 2, **characterized in that** the detection means (4) comprise an air velocity sensor (8).

4. An assembly as claimed in any one of claims 1 to 3, **characterized in that** the detection means (4) comprise a gas sensor (9).

5. An assembly as claimed in claim 4, **characterized in that** the gas sensor (9) is constituted by an ammonia sensor.

6. An assembly as claimed in any one of the preceding claims, **characterized in that** the detection means (4) comprise a sensor (11) for determining the light intensity.

7. An assembly as claimed in any one of the preceding claims, **characterized in that** the detection means (4) comprise an air pressure sensor (12) and/or an air humidity sensor (10).

8. An assembly as claimed in any one of the preceding claims, **characterized in that** the detection means (4) are disposed at different levels on a carrier.

9. An assembly as claimed in any one of claims 1 to 7, **characterized in that** the detection means (4) are disposed on a carrier (5) which is adjustable in height relative to the vehicle.

10. An assembly as claimed in any one of the preceding claims, **characterized in that** the unmanned vehicle (3) is provided with a data processing unit for storing the data from the sensors (7 to 12).

11. An assembly as claimed in any one of the preceding claims, **characterized in that** the unmanned vehicle (3) comprises a processing unit and/or a control unit for processing and/or registering data from the sensors.

12. An assembly as claimed in any one of the preceding claims, **characterized in that** the unmanned vehicle (3) is provided with alarm means for emitting an alarm signal when the climate in the stable has become uncontrollable.

13. An assembly as claimed in any one of the preceding claims, **characterized in that** the unmanned vehicle (3) comprises a transmitter unit for transmitting the data from the sensors and/or the control signals derived from the data from the sensors to a registration and/or control unit.

14. An assembly as claimed in any one of the preceding claims, **characterized in that** the unmanned vehicle (3) is provided with navigation means for guiding the unmanned vehicle (3) through the stable.

15. An assembly as claimed in any one of the preceding claims, **characterized in that** the unmanned vehicle (3) comprises an animal identification system and/or a camera and/or a radar.

16. An assembly as claimed in any one of the preceding claims, **characterized in that** the data collected by the unmanned vehicle are stored in a data management system.

17. An assembly as claimed in any one of the preceding claims, **characterized in that** the quantities of feed and/or the composition of the feed to be supplied to the animals are/is altered when the climate in the stable changes.

18. An assembly as claimed in claim 17, **characterized in that** the quantity of feed to be supplied to the animals is increased when the temperature in the stable has fallen below approximately 4°C.

## Patentansprüche

1. Anordnung, bestehend aus einem Stall und einem unbemannten Fahrzeug, das zur Verwendung in dem Stall (1), beispielsweise einem Kuhstall, geeignet ist, wobei das Fahrzeug (3) mit Ermittlungsvorrichtungen (4) zur Ermittlung des Klimas in dem Stall (1) versehen ist.

2. Anordnung nach Anspruch 1,
**dadurch gekennzeichnet, daß** die Ermittlungsvorrichtungen (4) einen Temperatursensor (7) umfassen.

3. Anordnung nach Anspruch 1 oder 2,
**dadurch gekennzeichnet, daß** die Ermittlungsvorrichtungen (4) einen Luftgeschwindigkeitssensor (8) umfassen.

4. Anordnung nach einem der Ansprüche 1 bis 3,
**dadurch gekennzeichnet, daß** die Ermittlungsvorrichtungen (4) einen Gassensor (9) umfassen.

5. Anordnung nach Anspruch 4,
**dadurch gekennzeichnet, daß** der Gassensor (9) durch einen Ammoniaksensor gebildet ist.

6. Anordnung nach einem der vorhergehenden Ansprüche,
**dadurch gekennzeichnet, daß** die Ermittlungsvorrichtungen (4) einen Sensor (11) zur Ermittlung der Lichtstärke umfassen.

7. Anordnung nach einem der vorhergehenden Ansprüche,
**dadurch gekennzeichnet, daß** die Ermittlungsvorrichtungen (4) einen Luftdrucksensor (12) und/oder einen Luftfeuchtigkeitssensor (10) umfassen.

8. Anordnung nach einem der vorhergehenden Ansprüche,
**dadurch gekennzeichnet, daß** die Ermittlungsvorrichtungen (4) in unterschiedlichen Höhen an einem Träger angeordnet sind.

9. Anordnung nach einem der Ansprüche 1 bis 7,
**dadurch gekennzeichnet, daß** die Ermittlungsvorrichtungen (4) an einem Träger (5) angeordnet sind, der relativ zu dem Fahrzeug höhenverstellbar ist.

10. Anordnung nach einem der vorhergehenden Ansprüche,
**dadurch gekennzeichnet, daß** das unbemannte Fahrzeug (3) mit einer Datenverarbeitungseinheit zum Speichern der Daten von den Sensoren (7 bis 12) versehen ist.

11. Anordnung nach einem der vorhergehenden Ansprüche,
**dadurch gekennzeichnet, daß** das unbemannte Fahrzeug (3) eine Verarbeitungseinheit und/oder eine Steuereinheit zum Verarbeiten und/oder Registrieren von Daten von den Sensoren umfaßt.

12. Anordnung nach einem der vorhergehenden Ansprüche,
**dadurch gekennzeichnet, daß** das unbemannte Fahrzeug (3) mit einer Alarmvorrichtung zur Abgabe eines Alarmsignals versehen ist, wenn das Klima in dem Stall unkontrollierbar geworden ist.

13. Anordnung nach einem der vorhergehenden Ansprüche,
**dadurch gekennzeichnet, daß** das unbemannte Fahrzeug (3) eine Sendeeinheit umfaßt, um die Daten von den Sensoren und/oder die von den Sensordaten abgeleiteten Steuersignale an eine Registrier- und/oder Steuereinheit zu senden.

14. Anordnung nach einem der vorhergehenden Ansprüche,
**dadurch gekennzeichnet, daß** das unbemannte Fahrzeug (3) mit einer Navigationsvorrichtung versehen ist, um das unbemannte Fahrzeug (3) durch den Stall zu leiten.

15. Anordnung nach einem der vorhergehenden Ansprüche,
**dadurch gekennzeichnet, daß** das unbemannte Fahrzeug (3) ein Tieridentifikationssystem und/oder eine Kamera und/oder ein Radar umfaßt.

16. Anordnung nach einem der vorhergehenden Ansprüche,
**dadurch gekennzeichnet, daß** die von dem unbemannten Fahrzeug gesammelten Daten in einem Datenverwaltungssystem gespeichert werden.

17. Anordnung nach einem der vorhergehenden Ansprüche,
**dadurch gekennzeichnet, daß** die den Tieren zuzuführenden Futtermengen und/oder die Zusammensetzung des Futters verändert werden/wird, wenn sich das Klima in dem Stall ändert.

18. Anordnung nach Anspruch 17,
**dadurch gekennzeichnet, daß** die den Tieren zuzuführende Futtermenge erhöht wird, wenn die Temperatur in dem Stall unter etwa 4°C gefallen ist.

## Revendications

1. Ensemble d'une écurie et d'un véhicule téléguidé adapté pour être utilisé dans ladite écurie (1), telle qu'une étable, ledit véhicule (3) étant équipé de moyens de détection (4) pour déterminer le climat dans l'écurie (1).

2. Ensemble selon la revendication 1, **caractérisé en ce que** les moyens de détection (4) comprennent un capteur de température (7).

3. Ensemble selon la revendication 1 ou 2, **caractérisé en ce que** les moyens de détection (4) comprennent un capteur de la vitesse de l'air (8).

4. Ensemble selon l'une quelconque des revendications 1 à 3, **caractérisé en ce que** les moyens de détection (4) comprennent un capteur de gaz (9).

5. Ensemble selon la revendication 4, **caractérisé en ce que** le capteur de gaz (9) est constitué d'un capteur d'ammoniac.

6. Ensemble selon l'une quelconque des revendications précédentes, **caractérisé en ce que** les moyens de détection (4) comprennent un capteur (11) pour déterminer l'intensité lumineuse.

7. Ensemble selon l'une quelconque des revendications précédentes, **caractérisé en ce que** les moyens de détection (4) comprennent un capteur de pression de l'air (12) et/ou un capteur d'humidité (10) de l'air.

8. Ensemble selon l'une quelconque des revendications précédentes, **caractérisé en ce que** les moyens de détection (4) sont agencés à différents niveaux sur un support.

9. Ensemble selon l'une quelconque des revendications 1 à 7, **caractérisé en ce que** les moyens de détection (4) sont disposés sur un support (5) qui est réglable en hauteur par rapport au véhicule.

10. Ensemble selon l'une quelconque des revendications précédentes, **caractérisé en ce que** le véhicule téléguidé (3) est équipé d'une unité de traitement de données pour stocker les données en provenance des capteurs (7 à 12).

11. Ensemble selon l'une quelconque des revendications précédentes, **caractérisé en ce que** le véhicule téléguidé (3) comprend une unité de traitement et/ou une unité de commande pour traiter et/ou enregistrer des données en provenance des capteurs.

12. Ensemble selon l'une quelconque des revendications précédentes, **caractérisé en ce que** le véhicule téléguidé (3) est équipé de moyens d'alarme pour émettre un signal d'alarme lorsque le climat dans l'écurie est devenu incontrôlable.

13. Ensemble selon l'une quelconque des revendications précédentes, **caractérisé en ce que** le véhicule téléguidé (3) comprend une unité d'émission pour émettre les données en provenance des capteurs et/ou les signaux de commande dérivés des données en provenance des capteurs vers une unité d'enregistrement et/ou de commande.

14. Ensemble selon l'une quelconque des revendications précédentes, **caractérisé en ce que** le véhicule téléguidé (3) est équipé de moyens de navigation pour guider le véhicule téléguidé (3) à travers l'écurie.

15. Ensemble selon l'une quelconque des revendications précédentes, **caractérisé en ce que** le véhicule téléguidé (3) comprend un système d'identification d'animaux et/ou une caméra et/ou un radar.

16. Ensemble selon l'une quelconque des revendications précédentes, **caractérisé en ce que** les données recueillies par le véhicule téléguidé sont stockées dans le système de gestion des données.

17. Ensemble selon l'une quelconque des revendications précédentes, **caractérisé en ce que** les quantités d'aliment et/ou la composition de l'aliment devant être fournie(s) aux animaux sont/est modifiée(s) lorsque le climat dans l'écurie change.

18. Ensemble selon la revendication 17, **caractérisé en ce que** la quantité d'aliment devant être fournie aux animaux est augmentée lorsque la température dans l'étable est tombée au-dessous de 4°C approximativement.
